# EUROPÄISCHE PATENTANMELDUNG

(11) **EP 1 014 358 A2**
(43) Veröffentlichungstag der Anmeldung: **28.06.2000**
(21) Anmeldenummer: 99204262.2
(22) Anmeldetag: 13.12.1999
(51) Int. Cl.: G11B 17/028

(54) **Plattenklemmvorrichtung**

(30) Priorität: 19.12.1998 DE 19858902
(71) Anmelder: Philips Corporate Intellectual Property GmbH, 52064 Aachen (DE); Koninklijke Philips Electronics N.V., 5621 BA Eindhoven (NL)
(72) Erfinder: Hopf, Christian, Philips Corp. Int. Prop. GmbH, 52064 Aachen (DE); Kunze, Norbert, Philips Corp. Int. Prop. GmbH, 52064 Aachen (DE); Müller, Stefan, Philips Corp. Int. Prop. GmbH, 52064 Aachen (DE); Rumpf, Horst, Philips Corp. Int. Prop. GmbH, 52064 Aachen (DE); Wouters, Cornelius, Philips Corp. Int. Prop. GmbH, 52064 Aachen (DE)
(74) Vertreter: Volmer, Georg, Dipl.-Ing.

(57) **Zusammenfassung**

Die Erfindung bezieht sich auf ein elektronisches Gerät zum Lesen von auf einem plattenförmigem Informationsträger (2; 12) gespeicherten Informationen und/oder zum Schreiben von Informationen auf einen plattenförmigen Informationsträger (2; 12) mit einem rotierend um eine Drehachse (3) antreibbaren Plattenteller (1; 11), auf den der plattenförmige Informationsträger (2; 12) aufsetzbar ist und mit einer Plattenklemmvorrichtung zur Klemmung des plattenförmigen Informationsträgers (2; 12) auf dem Plattenteller (1; 11), wobei der plattenförmige Informationsträger (2; 12) ein zentrisches Positionierloch (4; 14) aufweist.
Es ist Aufgabe der Erfindung, eine genauere radiale Zentrierung des plattenförmigen Informationsträgers auf dem Plattenteller zu ermöglichen.
Diese Aufgabe ist dadurch gelöst, daß die Plattenklemmvorrichtung ein radiales Klemmelement (6; 16) zur radialen Klemmung des plattenförmigen Informationsträgers (2; 12) auf dem Plattenteller (1; 11) aufweist, wobei das radiale Klemmelement (6; 16) ausschließlich zum Andruck gegen die Innenwand (4a; 14a) des Positionierloches (4; 14) des plattenförmigen Informationsträgers (2; 12) vorgesehen ist, und daß die Plattenklemmvorrichtung ein axiales Klemmelement (8; 18) zur axialen Klemmung des plattenförmigen Informationsträgers (2; 12) auf dem Plattenteller (1; 11) aufweist, wobei das axiale Klemmelement (8; 18) zum Andruck gegen die sich radial erstreckende Oberfläche (2a) des plattenförmigen Informationsträgers (2; 12) vorgesehen ist.

## Beschreibung

Die Erfindung bezieht sich auf ein elektronisches Gerät zum Lesen von auf einem plattenförmigem Informationsträger gespeicherten Informationen und/oder zum Schreiben von Informationen auf einen plattenförmigen Informationsträger mit einem rotierend um eine Drehachse antreibbaren Plattenteller, auf den der plattenförmige Informationsträger aufsetzbar ist und mit einer Plattenklemmvorrichtung zur Klemmung des plattenförmigen Informationsträgers auf dem Plattenteller, wobei der plattenförmige Informationsträger ein zentrisches Positionierloch aufweist.

Ein derartiges elektronisches Gerät ist beispielsweise aus der US 4,562,570 bekannt. Bei diesem bekannten Gerät sind als Plattenklemmvorrichtung innerhalb des Positionierloches des plattenförmigen Informationsträgers drei schwenkbar gelagerte Klemmelemente angeordnet. Die drei Klemmelemente weisen jeweils eine schräge Klemmfläche auf. Zur Klemmung des plattenförmigen Informationsträgers auf dem Plattenteller werden die schrägen Klemmflächen der Klemmelemente gegen die obere Kante des Positionierloches des plattenförmigen Informationsträgers gedrückt.

Das Positionierloch herkömmlicher plattenförmiger Informationsträger, wie beispielsweise CD oder DVD, wird üblicherweise gestanzt. Daher sind die obere Kante und die untere Kante des Positionierloches des Informationsträgers vielfach unsauber und undefiniert. Dadurch wird bei dem bekannten Gerät die radiale Zentrierung des Informationsträgers auf dem Plattenteller beeinträchtigt.

Es ist Aufgabe der Erfindung, ein elektronisches Gerät der eingangs genannten Art zu schaffen, welches eine genauere radiale Zentrierung des plattenförmigen Informationstragen auf dem Plattenteller ermöglicht.

Diese Aufgabe ist erfindungsgemäß dadurch gelöst, daß die Plattenklemmvorrichtung ein radiales Klemmelement zur radialen Klemmung des plattenförmigen Informationsträgers auf dem Plattenteller aufweist, wobei das radiale Klemmelement ausschließlich zum Andruck gegen die Innenwand des Positionierloches des plattenförmigen Informationstragers vorgesehen ist, und daß die Plattenklemmvorrichtung ein axiales Klemmelement zur axialen Klemmung des plattenförmigen Informationsträgers auf dem Plattenteller aufweist, wobei das axiale Klemmelement zum Andruck gegen die sich radial erstreckende Oberfläche des plattenförmigen Informationsträgers vorgesehen ist.

Unter Innenwand des Positionierloches wird derjenige Bereich verstanden, der zwischen der oberen Kante und der unteren Kante des Positionierloches liegt. Die Oberfläche dieser Innenwand ist sauberer und definierter als die obere und die untere Kante des Positionierloches. Der Andruck des radialen Klemmelementes gegen die Innenwand des Positionierloches ermöglicht daher eine genauere radiale Zentrierung des Informationsträgers auf dem Plattenteller. Das radiale Klemmelement ist ausschließlich für die radiale Klemmung vorgesehen und kann daher ausschließlich in der radialen Richtung wirken. Zur Klemmung in der axialen Richtung ist ein separates axiales Klemmelement vorgesehen. Dieses axiale Klemmelement wirkt vorzugsweise ausschließlich in der axialen Richtung und bewirkt eine axiale Klemmung mittels Andruck gegen die sich radial erstreckende Oberfläche des plattenförmigen Informationsträgers.
Mittels der separaten Realisierung der axialen und der radialen Klemmfunktion läßt sich somit eine sehr präzise axiale und radiale Positionierung des Informationsträgers auf dem Plattenteller realisieren.

Bei der vorteilhaften Ausgestaltung der Erfindung gemäß Anspruch 2 üben weder das radiale noch das axiale Klemmelement beim Aufsetzen des Informationsträgers auf den Plattenteller sowie beim Abnehmen des Informationsträgers von dem Plattenteller eine Kraft auf den Informationsträger aus. Bei dieser vorteilhaften Ausgestaltung der Erfindung lassen sich für den Transport des Informationsträgers vorgesehene Transportmechanismen besonders einfach realisieren. Derartige Transportmechanismen sind einerseits dafür vorgesehen, den Informationsträger beispielsweise von einem Einschubschlitz des Gerätes oder von einem sich in dem Gerät befindlichen Magazin zu dem Plattenteller zu transportieren und auf diesen abzusenken. Andererseits sind diese Transportmechanismen dazu vorgesehen, den Informationsträger von dem Plattenteller abzuheben und zu einem Magazin bzw. einer Auswurfposition zurück zu transportieren. Ein derartiger Transportmechanismus wird daher bei der vorteilhaften Ausgestaltung der Erfindung gemäß Anspruch 2 weder von dem radialen noch dem axialen Klemmelement behindert.

Bei der vorteilhaften Ausgestaltung der Erfindung gemäß Anspruch 3 werden das kraftfreie Aufsetzen des Informationsträgers auf den Plattenteller, die axiale Klemmung des plattenförmigen Informationsträgers mittels des axialen Klemmelementes und die radiale Klemmung des plattenförmigen Informationsträgers mittels des radialen Klemmelementes zeitlich aufeinanderfolgend ausgeführt. Dies hat den Vorteil, daß bei der Durchführung der radialen Klemmung bereits eine axiale Führung des Informationsträgers gegeben ist, so daß eine funktionssichere und genaue radiale Klemmung und Zentrierung gewährleistet ist. Bei dieser vorteilhaften Ausgestaltung der Erfindung wird ein eventuelles Verkippen bzw. Verkamen des Informationsträgers bei der radialen Zentrierung zuverlässig verhindert.

Der Zentrierdorn bei der vorteilhaften Ausgestaltung der Erfindung gemäß Anspruch 4 stellt eine einfache und zuverlässige Möglichkeit dar, eine Grobpositionierung des plattenförmigen Informationsträgers zu realisieren. Der plattenförmige Informationsträger wird mittels der Transportmittel zu dem Plattenteller transportiert und auf den Zentrierdorn abgesenkt, so daß der Zentrierdorn das Positionierloch des Informationsträgers durchgreift. Vorzugsweise wird der plattenförmige Informationsträger danach mittels des axialen Klemmelementes in der axialen Richtung positioniert. Nachfolgend ist die radiale Feinpositionierung des plattenförmigen Informationsträgers vorgesehen, wobei die radialen Klemmelemente innerhalb des Positionierloches den Außendurchmesser des Zentrierdornes vergrößern, indem sie sich in radialer Richtung auf die Innenwand des Positionierloches des Informationsträgers zu bewegen und an der Innenwand des Positionierloches zur Anlage kommen.

Bei der vorteilhaften Ausgestaltung der Erfindung gemäß Anspruch 5 befindet sich auf der Mantelfläche des kegelförmigen Zentrierdornes ein elastischer Ring, beispielsweise ein Federring. Dieser Federring ist in seiner Ruheposition axial oberhalb des Plattentellers angeordnet. Zunächst wird der Informationsträger auf den kegelförmigen Zentrierdorn aufgesetzt und vorzugsweise bereits axial auf dem Plattenteller mittels des axialen Klemmelementes positioniert. Zur radialen Zentrierung und Klemmung des plattenförmigen Informationsträgers wird der elastische Ring dann axial mittels eines Niederhalten entlang der Mantelfläche des kegelförmigen Zentrierdornes in axialer Richtung in das Positionierloch des Informationsträgers verschoben. Dabei wird der elastische Ring infolge der kegelförmigen Ausbildung des Zentrierdornes radial aufgeweitet. Der elastische Ring und der kegelförmige Zentrierdorn sind derart dimensioniert, daß der elastische Ring an der Innenwand des Positionierloches zur Anlage kommt und unter Abstützung an dem kegelförmigen Zentrierdorn die radiale Zentrierung und Fixierung des plattenförmigen Informationsträgers bewirkt. Eine derartige Konstruktion ist fertigungstechnisch günstig und benötigt wenig Bauraum. Zum Entfernen des plattenförmigen Informationsträgers von dem Plattenteller wird der Niederhalter in axialer Richtung von dem Plattenteller weggefahren, wodurch der aufgeweitete elastische Ring infolge seiner Federkraft sich von alleine in der axialen Richtung entlang der kegelförmigen Mantelfläche des Zentrierdornes von dem Plattenteller entfernt und somit dem Niederhalter folgt. Danach wird die axiale Klemmung mittels des axialen Klemmelementes aufgehoben und der Informationsträger kann kraftfrei von dem Plattenteller abgehoben werden.

Die Ausgestaltung dieser Ausführungsform gemäß Anspruch 6 hat den Vorteil, daß die radiale Zentrierung mittels des elastischen Ringes genau in derjenigen Hälfte des Informationsträgers erfolgt, in der die Information gespeichert ist. CDs und DVDs bestehen üblicherweise aus einer transparenten Hälfte, in der keine Informationen gespeichert sind, sowie aus einer Hälfte, in der sich die Informationsspuren befinden. Für den Laser, der diese Informationsspuren liest, ist es wichtig, daß diese Informationsspuren genau radial zentriert zu dem Plattenteller verlaufen. Die radiale Zentrierung des Informationsträgers auf der Höhe dieser Informationsspuren gewährleistet daher ein besonders gutes und exaktes Zusammenspiel zwischen dem Laser und dem rotierenden Informationsträger.

Als Alternative zu der Ausführungsform mit dem elastischen Ring können gemäß Anspruch 7 auch schwenkbare Hebelelemente vorgesehen sein. Diese schwenkbaren Hebelelemente wirken weder beim Aufsetzen des Informationsträgers auf den Plattenteller noch beim Abnehmen des Informationsträgers von dem Plattenteller auf diesen ein. Nach dem kraftfreien Aufsetzen des plattenförmigen Informationsträgers auf den Plattenteller wird dieser vorzugsweise zunächst axial mittels des axialen Klemmelementes fixiert. Danach verschwenken die schwenkbaren Hebelelemente radial nach außen und kommen an der Innenwand des Positionierloches des plattenförmigen Informationsträgers zur Anlage, wodurch eine exakte radiale Positionierung des plattenförmigen Informationsträgers auf dem Plattenteller gewährleistet wird. Zum Abnehmen des plattenförmigen Informationsträgen von dem Plattenteller verschwenken die schwenkbaren Hebelelemente radial nach innen und wirken dann beim Abnehmen des plattenförmigen Informationsträgers von dem Plattenteller nicht mehr auf den plattenförmigen Informationsträger ein.

Das erfindungsgemäße elektronische Gerät läßt sich vorzugsweise zum Abspielen und/oder Beschreiben von Informationsträgern nach dem DVD (Digital Versatile Disc)-Standard verwenden. DVD-Informationsträger weisen eine mehrfach erhöhte Speicherdichte im Vergleich zu Informationsträgern nach dem CD-Standard auf. Daher ist eine sehr genaue radiale Zentrierung der Informationsträger auf dem Plattenteller für ein fehlerfreies Lesen bzw. Beschreiben derartiger Informationsträger besonders wichtig. Das erfindungsgemäße elektronische Gerät ist besonders vorteilhaft für den Einbau in Fahrzeuge geeignet, da infolge der bei der Fahrt auftretenden Schwingungen, Vibrationen und Stößen eine genaue und zuverlässige radiale und axiale Zentrierung des Informationsträgers auf dem Plattenteller besonders wichtig ist.

Einige schematisch dargestellte Ausführungsbeispiele der Erfindung werden nachfolgend anhand der Zeichnung in den Fig. 1 bis 4 näher erläutert. Es zeigen:
Fig. 1 im Schnitt einen Plattenteller eines elektronischen Gerätes mit einer Plattenklemmvorrichtung für einen plattenförmigen Informationsträger, wobei der Plattenteller ein zum Durchgriff durch ein Positionierloch des Informationsträgers vorgesehenen kegelförmigen Zentrierdorn aufweist, auf dessen Mantelfläche ein elastischer Ring verschiebbar angeordnet ist, wobei die Plattenklemmvorrichtung nicht auf den Informationsträger einwirkt,
Fig. 2 die Plattenklemmvorrichtung gemäß Fig. 1, wobei der Informationsträger auf dem Plattenteller mittels des elastischen Ringes geklemmt ist,
Fig. 3 eine alternative Plattenklemmvorrichtung im Schnitt mit drei schwenkbaren Hebelelementen, wobei die Hebelelemente nicht auf den Informationsträger einwirken,
Fig. 4 die Plattenklemmvorrichtung gemäß Fig. 3, wobei die Hebelelemente zur radialen Zentrierung gegen die Innenwand des Positionierloches des Informationsträgers drücken.

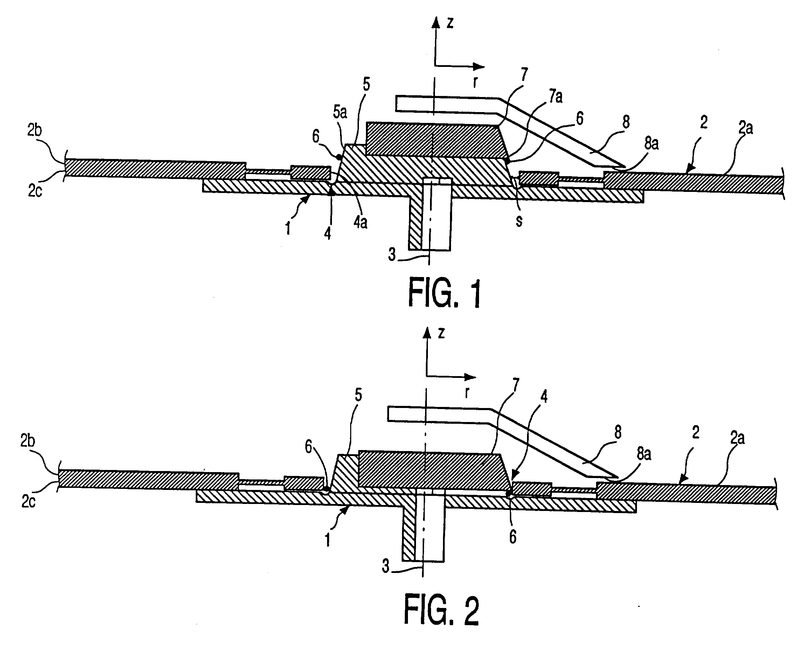

Fig. 1 zeigt schematisch im Schnitt einen Plattenteller eines elektronischen Gerätes zum Lesen von auf einem plattenförmigen Informationsträger 2 gespeicherten Informationen und/oder zum Schreiben von Informationen auf den plattenförmigen Informationsträger 2. Der Plattenteller 1 ist rotierend um eine Drehachse 3 in dem elektronischen Gerät gelagert und mittels einer nicht näher dargestellten Antriebsvorrichtung rotierend um die Drehachse 3 antreibbar. Der plattenförmige Informationsträger 2 weist ein zentrisches Positionierloch 4 mit einer Innenwand 4a auf. Der Plattenteller 1 weist einen kegelförmigen Zentrierdorn 5 auf, der durch das Positionierloch 4 des plattenförmigen Informationsträgers 2 durchgreift. Zwischen der Mantelfläche des kegelförmigen Zentrierdornes 5 und der Innenwand 4a des Positionierloches 4 des plattenförmigen Informationsträgers 2 ist ein Spiel S vorgesehen, so daß mittels des kegelförmigen Zentrierdornes 5 noch keine radiale Zentrierung des plattenförmigen Informationsträgers 2 auf dem Plattenteller 1 erfolgt. Auf der Mantelfläche des kegelförmigen Zentrierdornes 5 ist ein elastischer Federring 6 verschiebbar angeordnet. Dieser elastische Federring 6 befindet sich in der Fig. 1 oberhalb des Positionierloches 4 des plattenförmigen Informationsträgers 2. Der Federring 6 drückt infolge seiner Federkraft gegen die Mantelfläche 5a des Zentrierdornes 5. Auf dem kegelförmigen Zentrierdorn ist ein Niederhalter 7 verschiebbar angeordnet, welcher einen größeren Außendurchmesser als der kegelförmige Zentrierdorn 5 aufweist und zur Führung des elastischen Federringes 6 in der Z-Richtung vorgesehen ist. In der in der Fig. 1 dargestellten Position des Federringes 6 und des Niederhalters 7 verhindert der Niederhalter 7, daß der Federring 6 infolge seiner Federkraft sich weiter in der positiven Z-Richtung entlang der Mantelfläche 5a des kegelförmigen Zentrierdornes 5 bewegt. Mittels eines nicht näher dargestellten Verstellmechanismus läßt sich der Niederhalter 7 in der negativen Z-Richtung in Richtung auf das Positionierloch 4 des plattenförmigen Informationsträgers 2 bewegen. Dadurch läßt sich der elastische Federring 6, welcher gegen den Vorsprung 7a des Niederhalters 7 drückt, ebenfalls in Richtung auf das Positionierloch 4 des plattenförmigen Informationsträgers 2 bewegen.

Zur axialen Klemmung bzw. Fixierung des plattenförmigen Informationsträgers 2 auf dem Plattenteller 1 ist ein axialer Andruckteller 8 vorgesehen, welcher auf nicht näher dargestellte Weise verschwenkbar gelagen ist. Der Andruckteller 8 weist Klemmflächen 8a auf welche gegen die sich radial erstreckende Oberfläche 2a des plattenförmigen Informationstragen 2 drückbar sind. In der in der Fig. 1 dargestellten Position ist der plattenförmige Informationsträger 2 mittels des Andrucktellers 8 bereits in der axialen Z-Richtung fixiert. Infolge des Spiels S zwischen der Mantelfläche 5a des Zentrierdornes 5 und der Innenwand 4a des Positionierloches 4 des plattenförmigen Informationsträgers 2 ist jedoch noch keine radiale Zentrierung erfolgt.

Fig. 2 zeigt die Plattenklemmvorrichtung gemäß Fig. 1, wobei der plattenförmige Informationsträger 2 sowohl in der axialen Z-Richtung als auch in der radialen r-Richtung fixiert bzw. zentriert ist. Die radiale Zentrierung in der r-Richtung ist mittels des elastischen Federringes 6 realisiert, welcher mittels des Niederhalters 7 in das Positionierloch 4 des plattenförmigen Informationsträgers 2 gedrückt ist. Dabei drückt der elastische Federring 6 unter Abstützung an der Mantelfläche 5a des Zentrierdornes 5 und unter Abstützung an dem Vorsprung 7a des Niederhalters 7 gegen die Innenwand 4a des Positionierloches 4, wodurch die radiale Zentrierung bewirkt wird. Der kegelförmige Dorn 5 und der elastische Federring 6 sind derart dimensioniert, daß der elastische Ring 6 an der Innenwand 4a des Positionierloches 4 auf Höhe der die Information speichernden Hälfte 2c des plattenförmigen Informationsträgers zur Anlage kommt. Dadurch wird der plattenförmige Informationsträger 2 genau dort zentriert, wo sich die Informationsspuren befinden, so daß ein sehr genaues und exaktes Auslesen der Informationen mittels einer nicht näher dargestellten optischen Abspieleinheit gewährleistet ist. Der plattenförmige Informationsträger 2 ist vorzugsweise ein Informationsträger gemäß dem DVD-Standard, welcher eine höhere Informationsdichte aufweist als Informationsträger gemäß dem CD-Standard. Bei den plattenförmigen Informationsträgern gemäß dem DVD-Standard ist aufgrund der höheren Informationsdichte eine sehr präzise radiale Positionierung des plattenförmigen Informationsträgers besonders wichtig. Der plattenförmige Informationsträger 2 weist eine erste obere Hälfte 2b auf welche aus optisch transparentem Material besteht und eine untere Hälfte 2c, welche die Information speichen und in der sich die Informationsspuren mit den einzelnen Pits befinden.

Bei der Plattenklemmvorrichtung gemäß den Fig. 1 und 2 wird somit die axiale und die radiale Zentrierung mittels getrennter Elemente realisiert. Zur axialen Fixierung des plattenförmigen Informationsträgers 2 auf dem Plattenteller 1 ist der axiale Andruckteller 8 vorgesehen, welcher auf den plattenförmigen Informationsträger 2 ausschließlich eine Kraft in der axialen Z-Richtung ausübt. Zur radialen Zentrierung des plattenförmigen Informationsträgers 2 auf dem Plattenteller 1 ist der elastische Federring 6 vorgesehen, welcher zur Zentrierung an der Innenwand 4a des Positionierloches 4 zur Anlage kommt und ausschließlich eine Kraft in der radialen r-Richtung auf dem plattenförmigen Informationsträger 2 ausübt. Mit einer derartigen Anordnung läßt sich eine sehr exakte und präzise axiale und radiale Positionierung realisieren.

Bei der Klemmvorrichtung gemäß den Fig. 1 und 2 läßt sich das Aufsetzen des plattenförmigen Informationsträgers 2 auf den Plattenteller 1 sowie das Abnehmen des plattenförmigen Informationsträgers 2 von dem Plattenteller 1 jeweils kraftfrei realisieren. Dies bedeutet, daß die Plattenklemmvorrichtung gemäß den Fig. 1 und 2 beim Aufsetzen und Abnehmen des plattenförmigen Informationsträgers 2 keine Kraft auf den plattenförmigen Informationsträger 2 ausübt. Zum Aufsetzen des plattenförmigen Informationsträgers 2 auf den Plattenteller 1 wird der axiale Andruckteller 8 auf nicht näher dargestellte Weise weggeschwenkt und der Federring 6 und der Niederhalter 7 befinden sich in der Position gemäß Fig. 1. Damit ist ein kraftfreies Aufsetzen des plattenförmigen Informationsträgers auf den Plattenteller 1 möglich. Auch für das Abnehmen des plattenförmigen Informationsträgers 2 von dem Plattenteller 1 befinden sich der Federring 6 und der Niederhalter 7 in der in der Fig. 1 dargestellten Position. Der axiale Andruckteller 8 ist ebenfalls auf nicht naher dargestellte Weise weggeschwenkt, so daß auch das Abnehmen des plattenförmigen Informationsträgers 2 von dem Plattenteller 1 kraftfrei mittels einer nicht näher dargetellten Transportvorrichtung realisierbar ist.

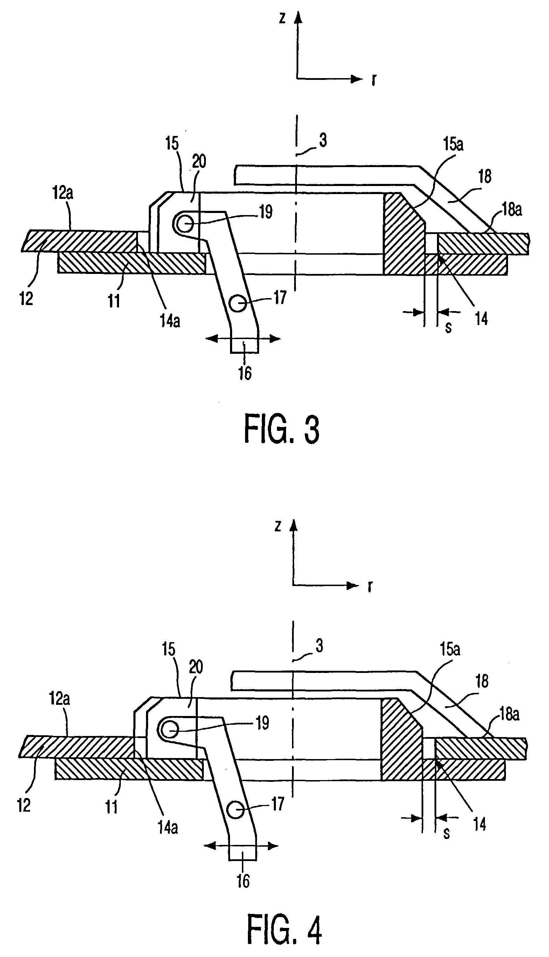

Fig. 3 zeigt eine alternative Ausführungsform einer Plattenklemmvorrichtung eines elektronischen Gerätes, welche einen Plattenteller 11 aufweist, auf dem ein plattenförmiger Informationsträger 12 positionierbar ist. Der Plattenteller 11 ist um eine Drehachse 3 rotierend antreibbar. Der plattenförmige Informationsträger 12 weist ein Positionierloch 14 mit einer Innenwand 14a auf Der Plattenteller 11 weist einen Zentrierdorn 15 auf; welcher das Positionierloch 4 des plattenförmiger Informationsträgers 12 durchgreift. Zur axialen Positionierung des plattenförmigen Informationsträgers 12 auf den Plattenteller 11 in der Z-Richtung ist ein axialer Andruckteller 18 vorgesehen, welcher Andruckflächen 18a aufweist, die zum axialen Andruck gegen die sich radial erstreckende Oberfläche 12a des plattenförmigen Informationsträgers 12 vorgesehen ist. In der in der Fig. 3 dargestellten Position ist der plattenförmige Informationsträger 12 bereits in der axialen Z-Richtung mittels des axialen Andrucktellers 18 fixiert. Zur radialen Zentrierung des plattenförmigen Informationsträgers 12 auf dem Plattenteller 11 weist die Plattenklemmvorrichtung wenigstens drei schwenkbar um eine Schwenkachse 17 gelagerte Hebelelemente 16 auf. An diesen schwenkbaren Hebelelementen 16 ist jeweils innerhalb des kegelförmigen Zentrierdornes 15 ein Andruckelement 20 vorgesehen, welches um eine Drehachse 19 an den Hebelelementen 16 gelagen ist. Die Andruckelemente 20 sind in nicht näher dargestellten Nuten des Zentrierdornes 15 gelagert und lassen sich mittels der Hebelelemente 16 in der radialen r-Richtung gegen die Innenwand 14a des plattenförmigen Informationsträgers 12 drücken. Der Außendurchmesser des Zentrierdornes 15 ist derart dimensioniert, daß zwischen der Mantelfläche 15a des kegelförmigen Zentrierdomes 15 und der Innenwand 14a des plattenförmigen Informationsträgers 2 ein radiales Spiel S vorhanden ist. Zur radialen Zentrierung des plattenförmigen Informationsträgers 12 auf dem Plattenteller 11 werden die Andruckelemente 20 mittels der schwenkbaren Hebelelemente 16 in der radialen r-Richtung nach außen gegen die Innenwand 14a des Positionierloches 14 des plattenförmigen Informationsträgers 12 gedrückt.

Auch bei dieser Ausführungsform werden somit die axiale und die radiale Zentrierung jeweils mittels getrennter Elemente realisiert.

In der Fig. 4 ist der plattenförmige Informationsträger 12 sowohl mittels des axialen Andrucktellers 18 in der axialen Z-Richtung als auch mittels der Andruckelemente 20 in der radialen r-Richrung auf dem Plattenteller 11 fixiert. Die radialen Andruckelemente 20 drücken dabei ausschließlich radial gegen die Innenwand 14a des Positionierloches 14 des plattenförmigen Informationsträgers 12 und der axiale Andruckteller 18 ausschließlich axial mittels der Andruckflächen 18a gegen die radiale Oberfläche 12a des plattenförmigen Informationsträgers 12.

Zum Aufsetzen des plattenförmigen Informationsträgers 12 auf den Plattenteller 11 wird der axiale Andruckteller 18 auf nicht näher dargestellte Weise weggeschwenkt, wodurch ein kraftfreies Aufsetzen des plattenförmigen Informationsträgers 12 auf den Plattenteller 11 möglich ist. Bei dem Aufsetzen sind die Hebelelemente 16 und die Andruckelemente 20 radial nach innen verschwenkt und wirken nicht auf den plattenförmigen Informationsträger 12 ein. Diese Position der Hebelelemente 16 und der Andruckelemente 20 entspricht der in der Fig. 3 dargestellten Position dieser Elemente. Auch das Abnehmen des plattenförmigen Informationsträgers 12 von dem Plattenteller 11 erfolgt in analoger Weise bei nach innen verschwenkten Hebelelementen 16 und weggeschwenktem axialen Andrucktellers 18. Damit ist ein kraftfreies Aufsetzen und Abnehmen des plattenförmigen Informationsträgers 12 mittels eines nicht näher dargestellten Transportmechanismus möglich.

## Patentansprüche

1. Elektronisches Gerät zum Lesen von auf einem plattenförmigem Informationsträger (2; 12) gespeicherten Informationen und/oder zum Schreiben von Informationen auf einen plattenförmigen Informationsträger (2; 12) mit einem rotierend um eine Drehachse antreibbaren Plattenteller (1; 11), auf den der plattenförmige Informationsträger (2; 12) aufsetzbar ist und mit einer Plattenklemmvorrichtung zur Klemmung des plattenförmigen Informationsträgers auf dem Plattenteller, wobei der plattenförmige Informationsträger (2; 12) ein zentrisches Positionierloch (4; 14) aufweist, dadurch gekennzeichnet,
daß die Plattenklemmvorrichtung ein radiales Klemmelement (6; 16) zur radialen Klemmung des plattenförmigen Informationsträgers (2; 12) auf dem Plattenteller aufweist, wobei das radiale Klemmelement (6; 16) ausschließlich zum Andruck gegen die Innenwand (4a 14a) des Positionierloches (4; 14) des plattenförmigen Informationsträgers (2; 12) vorgesehen ist, und daß die Plattenklemmvorrichtung ein axiales Klemmelement (8; 18) zur axialen Klemmung des plattenförmigen Informationsträgers (2; 12) auf dem Plattenteller (1; 11) aufweist, wobei das axiale Klemmelement (8; 18) zum Andruck gegen die sich radial erstreckende Oberfläche (2a) des plattenförmigen Informationsträgers (2; 12) vorgesehen ist.

2. Elektronisches Gerät nach Anspruch 1, dadurch gekennzeichnet,
daß die Plattenklemmvorrichtung mit dem radialen (6; 16) und dem axialen Klemmelement (8; 18) derart ausgebildet ist, daß der plattenförmige Informationsträger (2; 12) im wesentlichen kraftfrei auf den Plattenteller (1; 11) aufsetzbar ist und im wesentlichen kraftfrei von dem Plattenteller (1; 11) abnehmbar ist.

3. Elektronisches Gerät nach Anspruch 2, dadurch gekennzeichnet,
daß zur Positionierung des plattenförmigen Informationsträgers (2; 12) auf dem Plattenteller (1; 11) in einem ersten Schritt das kraftfreie Aufsetzen des plattenförmigen Informationsträgers (2; 12) auf den Plattenteller (1; 11) vorgesehen ist, daß in einem zweiten Schritt die axiale Klemmung des plattenförmigen Informationsträgers (2; 12) mittels des axialen Klemmelementes (8; 18) vorgesehen ist und daß in einem dritten Schritt die radiale Klemmung des plattenförmigen Informationsträgers (2; 12) mittels des radialen Klemmelementes (6; 16) vorgesehen ist.

4. Elektronisches Gerät nach Anspruch 1, dadurch gekennzeichnet,
daß die Klemmvorrichtung einen Zentrierdorn (5; 15) aufweist, der zum Durchgriff durch das Positionierloch (4; 14) des plattenförmigen Informationsträgers (2; 12) und zur radialen Grobpositionierung des plattenförmigen Informationsträgers (2; 12) vorgesehen ist und daß die radialen Klemmelemente (6; 16) zur radialen Feinpositionierung des plattenförmigen Informationsträgers (2; 12) mittels einer Vergrößerung des Außendurchmessers des Zentrierdornes (5; 15) innerhalb des Positionierloches (4; 14) vorgesehen sind.

5. Elektronisches Gerät nach Anspruch 4, dadurch gekennzeichnet,
daß der zum Durchgriff durch das Positionierloch (4) des Informationsträgers (2) vorgesehene Zentrierdorn (5) kegelförmig ausgebildet ist, daß auf der Mantelfläche des kegelförmigen Zentrierdornes (5) ein elastischer Ring (6) axial verschiebbar angeordnet ist, daß der elastische Ring (6) mittels eines Niederhalters (7) in axialer Richtung in das Positionierloch (4) des Informationsträgers (2) verschiebbar ist, so daß der elastische Ring (6) an der Innenwand (4a) des Positionierloches (4) des Informationsträgers (2) zur Anlage kommt.

6. Elektronisches Gerät nach Anspruch 5, dadurch gekennzeichnet,
daß der kegelförmige Dorn (5) und der elastische Ring (6) derart dimensioniert sind, daß der elastische Ring (6) an der Innenwand (4a) des Positionierloches (4) auf Höhe des die Information speichernden Bereichs (2c) des Informationsträgers (2) zur Anlage kommt.

7. Elektronisches Gerät nach Anspruch 1, dadurch gekennzeichnet,
daß als radiale Klemmelemente mindestens drei schwenkbare Hebelelemente (16) vorgesehen sind, welche nach dem Aufsetzen des plattenförmigen Informationsträgers (12) auf den Plattenteller (11) radial gegen die Innenwand (14a) des Positionierloches (14) des plattenförmigen Informationsträgers (12) drückbar sind.

8. Elektronisches Gerät nach Anspruch 1, dadurch gekennzeichnet, daß das Gerät zum Lesen von plattenförmigen Informationsträgern nach dem DVD (Digital Versatile Disc) - Standard vorgesehen ist.

9. Fahrzeug mit einem elektronischen Gerät nach einem der Ansprüche 1 bis 8.
